# EUROPÄISCHE PATENTSCHRIFT

(11) **EP 3 910 443 B1**
(45) Veröffentlichungstag und Bekanntmachung des Hinweises auf die Patenterteilung: **25.12.2024**
(21) Anmeldenummer: 21401021.7
(22) Anmeldetag: 03.05.2021
(51) Int. Cl.: G05D 1/00

(54) **VERFAHREN ZUM ERMITTELN EINES BEWEGUNGSPFADS FÜR EINE LANDMASCHINE**
METHOD FOR DETERMINING A MOVEMENT PATH FOR AN AGRICULTURAL MACHINE
PROCÉDÉ DE DÉTERMINATION D'UN TRAJET DE DÉPLACEMENT POUR UNE MACHINE AGRICOLE

(30) Priorität: 04.05.2020 DE 102020111958
(43) Veröffentlichungstag der Anmeldung: 17.11.2021
(73) Patentinhaber: Amazonen-Werke H. Dreyer GmbH & Co. KG, 49205 Hasbergen-Gaste (DE)
(72) Erfinder: Dreyer, Justus, 49078 Osnabrück (DE); Wessels, Thomas, 49080 Osnabrück (DE); Große Brinkhaus, Andre, 48149 Münster (DE); Kielhorn, Arnd, 49090 Osnabrück (DE)

(56) Entgegenhaltungen:
- US-A1- 2020 029 487
- US-A1- 2020 033 143
- US-B1- 6 236 924

## Beschreibung

Die Erfindung betrifft ein Verfahren zum Ermitteln eines Bewegungspfads für eine Landmaschine nach dem Oberbegriff des Patentanspruchs 1 und ein System nach dem Oberbegriff des Patentanspruchs 14.

Bei der Bearbeitung von landwirtschaftlichen Nutzflächen, beispielsweise bei der Streugutausbringung, führt die Geländetopografie der landwirtschaftlichen Nutzfläche häufig zu einer Beeinträchtigung des Bearbeitungsergebnisses. Außerdem können gekrümmte Geländeformen, wie Hänge, Mulden, Täler, Senken oder Kuppen, zu einer erheblichen Steigerung des für die Bearbeitung erforderlichen Kraftstoffs führen.

Aus der Druckschrift US 2019/0129430 A1 ist die Anpassung eines Bewegungspfads einer Landmaschine während der Bearbeitung einer landwirtschaftlichen Nutzfläche infolge einer identifizierten Geländeeigenschaft bekannt. Ferner ist aus diesem Dokument auch das Anpassen von Einstellparametern der Landmaschine infolge einer identifizierten Geländeeigenschaft bekannt. Die US 2020 0 029 487 A1 offenbart ebenfalls die Anpassung eines Bewegungspfades infolge einer identifizierten Geländeeigenschaft.

Bei den bekannten Lösungen zur Anpassung des Bewegungspfads einer Landmaschine erfolgt die Erfassung von Geländeeigenschaften über die Sensorik der Landmaschine, sodass die Planung eines topografieoptimierten Bewegungspfads vor der eigentlichen Bearbeitung der landwirtschaftlichen Nutzfläche bisher nicht möglich ist. Ferner werden bei der Anpassung des Bewegungspfads während der Bearbeitung einer landwirtschaftlichen Nutzfläche die Einstellmöglichkeiten der Landmaschine und deren Grenzen bisher nicht berücksichtigt, sodass es vorkommen kann, dass das Bearbeitungsergebnis trotz eines geänderten Bewegungspfads nicht verbessert wird.

Die der Erfindung zugrundeliegende Aufgabe besteht somit darin, die topografieoptimierte Bearbeitung von landwirtschaftlichen Nutzflächen weiter zu verbessern.

Die Aufgabe wird gelöst durch ein Verfahren nach Anspruch 1.

Im Rahmen des erfindungsgemäßen Verfahrens erfolgt also keine maschinenübergreifend gültige Bewegungspfadberechnung, sondern eine Berechnung des Bewegungspfads, bei welcher sowohl das Gelände als auch vorgegebene landmaschinenspezifische Einstellbereiche der an der Landmaschine veränderbaren Einstellparameter berücksichtigt werden. Somit kann gewährleistet werden, dass beim Befahren des berechneten topografieoptimierten Bewegungspfads jederzeit auch die erforderliche Parameteranpassung an der Landmaschine umsetzbar ist. Ein Bewegungspfad, welcher Einstellungen außerhalb eines durch die Landmaschine realisierbaren Einstellbereichs erfordert, wird somit effektiv vermieden. Die Planung des topografieoptimierten Bewegungspfads erfolgt somit anhand der Möglichkeiten, welche die Landmaschine bietet. Der topographieoptimierte Bewegungspfad wird bereits bei der Anlage eines Fahrgassensystems auf der landwirtschaftlichen Nutzfläche berücksichtigt. Die Anlage des Fahrgassensystems erfolgt während eines Sävorgangs mit einer Sämaschine, wobei die Anlage der Fahrgassensystems also vorausschauend für eine andere Landmaschine, wie etwa eine Streumaschine, angelegt wird, mit welcher eine Folgebearbeitung der landwirtschaftlichen Nutzfläche geplant ist.

Die Landmaschine kann beispielsweise eine landwirtschaftliche Streumaschine sein. Bei einer Streumaschine lässt sich beispielsweise die Scheibendrehzahl der Streuscheiben, der Aufgabepunkt des Streuguts auf die Streuscheiben und/oder die Stellung eines Streugutmengeneinstellschiebers einstellen. Mithin können die veränderbaren Einstellparameter die Scheibendrehzahl, den Aufgabepunkt und/oder die Schieberstellung für die Streugutmengeneinstellung betreffen. Ferner können die veränderbaren Einstellparameter andere das Streubild beeinflussende Einstellparameter betreffen, beispielsweise die Konfiguration und/oder Geometrie der Abwurfschaufeln und/oder den Typ der Streuscheibe. Ferner ist es vorstellbar, dass nur eine Sollwurfweite und eine Sollwurfrichtung für die Streumaschine vorgegeben werden. Mittels eines Messsystems an der Streumaschine können die Wurfweite und die Wurfrichtung dann entsprechend der Sollwerte während der Streugutausbringung eingeregelt werden.

Beim Berechnen des topografieoptimierten Bewegungspfads werden von der Datenverarbeitungseinrichtung also auch limitierende Faktoren berücksichtigt, wie beispielsweise die landmaschinenspezifischen Einstellbereiche der veränderbaren Einstellparameter oder eine vorgegebene Arbeitsbreite. Dadurch, dass landmaschinenspezifische Einstellbereiche berücksichtigt werden, fließen in die Berechnung des topografieoptimierten Bewegungspfads auch Minimal- und Maximalwerte der veränderbaren Einstellparameter ein. Ferner kann berücksichtigt werden, ob die Einstellparameter stufenlos oder schrittweise einstellbar sind. Der durch die Datenverarbeitungseinrichtung berechnete topografieoptimierte Bewegungspfad kann auch eine Fahrtrichtung ausweisen.

Das Ermitteln des topographieoptimierten Bewegungspfads erfolgt vorzugsweise zum Planen des Anbaus von Kulturpflanzen auf einer landwirtschaftlichen Nutzfläche, welche sich über einen gekrümmten Geländebereich erstreckt. Der ermittelte topographieoptimierte Bewegungspfad wird beim Anlegen eines Fahrgassensystems auf der landwirtschaftlichen Nutzfläche berücksichtigt, sodass ein dem topographieoptimierten Bewegungspfad folgendes Fahrgassensystem angelegt wird. Das Fahrgassensystem wird mittels einer Sämaschine während eines Sävorgangs angelegt. Der topografieoptimierte Bewegungspfad berücksichtigt die Einstellmöglichkeiten der Landmaschinen, mit welchen die landwirtschaftliche Nutzfläche nach dem Sävorgang bearbeitet werden soll. Der topografieoptimierte Bewegungspfad ist ein an die Höhen, Tiefen, Unregelmäßigkeiten und Formen der Erdoberfläche im Bereich der landwirtschaftlichen Nutzfläche angepasster Bewegungspfad. Ein Düngerstreuer kann beim Befahren des topographieoptimierten Bewegungspfads trotz der Geländekrümmung die beabsichtigte Düngerverteilung umsetzen, sodass trotz der Geländekrümmung ein hoher Ertrag auf der landwirtschaftlichen Nutzfläche erzielt werden kann.

In einer bevorzugten Ausführungsform des erfindungsgemäßen Verfahrens wird eine Bearbeitungskarte der landwirtschaftlichen Nutzfläche durch die Datenverarbeitungseinrichtung erstellt. Die Bearbeitungskarte weist vorzugsweise die empfangenen Topografieinformationen und/oder den berechneten topografieoptimierten Bewegungspfad aus. Die erstellte Bearbeitungskarte der landwirtschaftlichen Nutzfläche kann eine zweidimensionale oder dreidimensionale Karte der landwirtschaftlichen Nutzfläche sein. Die erstellte Bearbeitungskarte kann ferner ein Luft- oder Satellitenbild der landwirtschaftlichen Nutzfläche umfassen. Die Topografieinformationen und/oder der berechnete topografieoptimierte Bewegungspfad können in Form einer Überlagerung, d.h. in Form eines sogenannten Overlays, über das Luft- oder Satellitenbild gelegt sein.

In einer vorteilhaften Ausgestaltung des erfindungsgemäßen Verfahrens berechnet die Datenverarbeitungseinrichtung topografieoptimierte Einstellvorgaben für die Landmaschine für die Bearbeitung der landwirtschaftlichen Nutzfläche unter Berücksichtigung der empfangenen Einstellinformationen und der empfangenen Topografieinformationen. Das Berechnen der topografieoptimierten Einstellvorgaben erfolgt vorzugsweise zeitlich vor der Bearbeitung der landwirtschaftlichen Nutzfläche. Beim Berechnen des topografieoptimierten Bewegungspfads werden vorzugsweise die veränderbaren Einstellparameter und deren Einfluss auf das Bearbeitungsergebnis sämtlicher Landmaschinen berücksichtigt, mit welchen noch eine Folgebearbeitung innerhalb des aktuellen Anbauzyklus der landwirtschaftlichen Nutzfläche geplant ist. Der berechnete Bewegungspfad kann also auch für mehrere unterschiedliche Landmaschinen topographieoptimiert sein. Vorzugsweise weist die von der Datenverarbeitungseinrichtung erstellte Bearbeitungskarte der landwirtschaftlichen Nutzfläche die berechneten topografieoptimierten Einstellvorgaben aus. Vorzugsweise berechnet die Datenverarbeitungseinrichtung topografieoptimierte Einstellvorgaben für die gesamte Bearbeitung der landwirtschaftlichen Nutzfläche, also für die gesamte Strecke des berechneten topografieoptimierten Bewegungspfads. Wenn eine unbeabsichtigte Abweichung von dem topografieoptimierten Bewegungspfad und/oder eine unbeabsichtigte Abweichung von den Einstellvorgaben während der Bearbeitung der landwirtschaftlichen Nutzfläche erfolgt, kann der berechnete topografieoptimierte Bewegungspfad und/oder die berechneten topografieoptimierten Einstellvorgaben korrigiert oder neu berechnet werden.

In einer weiteren bevorzugten Ausführungsform des erfindungsgemäßen Verfahrens berechnet die Datenverarbeitungseinrichtung topografieoptimierte Einstellpositionen für die topografieoptimierten Einstellvorgaben entlang des topografieoptimierten Bewegungspfads. Das Berechnen der topografieoptimierten Einstellpositionen erfolgt vorzugsweise zeitlich vor der Bearbeitung der landwirtschaftlichen Nutzfläche. Vorzugsweise weist die von der Datenverarbeitungseinrichtung erstellte Bearbeitungskarte der landwirtschaftlichen Nutzfläche die berechneten topografieoptimierten Einstellpositionen aus. Durch ein maschinenseitiges Einstellen der topografieoptimierten Einstellvorgaben an den topografieoptimierten Einstellpositionen kann ein Soll-Bearbeitungsergebnis für jede Topografie erreicht werden. Das Soll-Bearbeitungsergebnis kann beispielsweise die homogene Ausbringung von Streugut betreffen. Durch das Befahren des topographieoptimierten Bewegungspfads und das Einstellen der topografieoptimierten Einstellvorgaben kann also trotz einer gekrümmten Geländeform eine homogene Streugutverteilung erreicht werden, welche bei einem flachen Gelände durch das Ausführen von Parallelfahrten erreicht werden würde. Es wird somit das Erreichen eines Soll-Ergebnisses auch bei einer geplanten oder spontanen Abweichung von dem Parallelfahrtenprinzip sichergestellt.

Bei dem Soll-Bearbeitungsergebnis handelt es sich vorzugsweise um ein topografieoptimiertes Bearbeitungsergebnis.

In einer weiteren bevorzugten Ausführungsform des erfindungsgemäßen Verfahrens empfängt die Datenverarbeitungseinrichtung Flächeninformationen zu der Größe und/oder der Form der zu bearbeitenden landwirtschaftlichen Nutzfläche. Das Berechnen des topografieoptimierten Bewegungspfads, das Berechnen der topografieoptimierten Einstellvorgaben und/oder das Berechnen der topografieoptimierten Einstellpositionen erfolgt vorzugsweise auch unter Berücksichtigung der empfangenen Flächeninformationen. Die von der Datenverarbeitungseinrichtung erstellte Bearbeitungskarte der landwirtschaftlichen Nutzfläche weist vorzugsweise die empfangenen Flächeninformationen aus.

Es ist ferner ein erfindungsgemäßes Verfahren vorteilhaft, bei welchem die Datenverarbeitungseinrichtung Bodeninformationen zu dem Bodenzustand der zu bearbeitenden landwirtschaftlichen Nutzfläche empfängt. Vorzugsweise erfolgt das Berechnen des topografieoptimierten Bewegungspfads, das Berechnen der topografieoptimierten Einstellvorgaben und/oder das Berechnen der topografieoptimierten Einstellpositionen auch unter Berücksichtigung der empfangenen Bodeninformationen. Die von der Datenverarbeitungseinrichtung erstellte Bearbeitungskarte der landwirtschaftlichen Nutzfläche weist vorzugsweise die empfangenen Bodeninformationen aus. Die Bodeninformationen können Informationen über die Bodenkompression der zu bearbeitenden landwirtschaftlichen Nutzfläche umfassen. Ferner können die Bodeninformationen auch Informationen zu der Güte und/oder Art des Erdreichs umfassen.

In einer anderen bevorzugten Ausführungsform des erfindungsgemäßen Verfahrens ist die Datenverarbeitungseinrichtung Bestandteil eines lokalen Computers und die Einstellinformationen, die Topografieinformationen, die Flächeninformationen und/oder die Bodeninformationen werden durch den lokalen Computer abgerufen. Die Einstellinformationen, die Topografieinformationen, die Flächeninformationen und/oder die Bodeninformationen können beispielsweise von einer oder mehreren externen Datenbanken und/oder einem oder mehreren Sensoren abgerufen werden. Das Abrufen der Einstellinformationen, der Topografieinformationen, der Flächeninformationen und/oder der Bodeninformationen durch den lokalen Computer kann über das Internet erfolgen.

In einer alternativen Ausführungsform des erfindungsgemäßen Verfahrens ist die Datenverarbeitungseinrichtung Bestandteil eines über ein Netzwerk zugänglichen Zentralcomputers. Die Einstellinformationen, die Topografieinformationen, die Flächeninformationen und/oder die Bodeninformationen werden in diesem Fall vorzugsweise durch den Zentralcomputer von einer oder mehreren externen Datenbanken abgerufen. Das Abrufen der Einstellinformationen, der Topografieinformationen, der Flächeninformationen und/oder der Bodeninformationen durch den Zentralcomputer erfolgt vorzugsweise über das Internet. Der Zentralcomputer kann beispielsweise ein Berechnungsserver sein. Der Berechnungsserver kann beispielsweise dem Hersteller der Landmaschine betrieben werden.

Das erfindungsgemäße Verfahren wird ferner dadurch vorteilhaft weitergebildet, dass das Empfangen der Einstellinformationen, der Topografieinformationen, der Flächeninformationen und/oder der Bodeninformationen durch eine Benutzereingabe an einem Eingabegerät veranlasst wird. Das Eingabegerät ist vorzugsweise signalleitend, beispielsweise kabelgebunden und/oder drahtlos, mit der Datenverarbeitungseinrichtung verbunden. Das Eingabegerät kann ein oder mehrere Eingabeelemente, wie beispielsweise Knöpfe oder Tasten, umfassen oder als Touchscreen ausgebildet sein.

Die der Erfindung zugrundeliegende Aufgabe wird ferner durch ein Verfahren zum Bearbeiten einer landwirtschaftlichen Nutzfläche der eingangs genannten Art gelöst, wobei das Ermitteln des Bewegungspfads topografieoptimiert nach einer der vorstehend beschriebenen Ausführungsformen erfolgt. Hinsichtlich der Vorteile und Modifikationen des Verfahrens zum Bearbeiten einer landwirtschaftlichen Nutzfläche wird zunächst auf die Vorteile und Modifikationen des erfindungsgemäßen Verfahrens zum Ermitteln eines topografieoptimierten Bewegungspfads für eine Landmaschine verwiesen.

In einer bevorzugten Ausführungsform des erfindungsgemäßen Verfahrens wird eine den topografieoptimierten Bewegungspfad ausweisende Bearbeitungskarte der landwirtschaftlichen Nutzfläche durch ein portables Anzeigegerät oder eine Anzeigeeinrichtung der Landmaschine von einer Datenbank abgerufen. Das portable Anzeigegerät kann ein Terminal, beispielsweise ein Isobus-Terminal, sein. Alternativ kann das portable Anzeigegerät auch ein mobiles Endgerät, wie etwa ein Smartphone oder ein Tablet, sein. Vorzugsweise wird die Bearbeitungskarte durch das portable Anzeigegerät oder die Anzeigeeinrichtung der Landmaschine während der Bearbeitung der landwirtschaftlichen Nutzfläche angezeigt. Die Bearbeitungskarte kann außerdem Topografieinformationen, Flächeninformationen und/oder Bodeninformationen zu der landwirtschaftlichen Nutzfläche ausweisen. Die Bearbeitungskarte kann außerdem topografieoptimierte Einstellvorgaben und/oder topografieoptimierte Einstellpositionen für die Einstellvorgaben ausweisen. Auf der Bearbeitungskarte kann der Bearbeitungsvorgang in Echtzeit visualisiert werden, beispielsweise über die Darstellung der aktuellen Maschinenposition und/oder des aktuell eingestellten Streubildes, falls es sich bei der Landmaschine um eine landwirtschaftliche Streumaschine handelt.

In einer weiteren bevorzugten Ausführungsform des erfindungsgemäßen Verfahrens werden topografieoptimierte Einstellvorgaben für die Landmaschine für die Bearbeitung der landwirtschaftlichen Nutzfläche durch die Landmaschine abgerufen. Vorzugsweise werden topografieoptimierte Einstellpositionen für die topografieoptimierten Einstellvorgaben entlang des topografieoptimierten Bewegungspfads durch die Landmaschine abgerufen. Insbesondere erfolgt ein selbsttätiges Einstellen der topografieoptimierten Einstellvorgaben an den topografieoptimierten Einstellpositionen durch die Landmaschine während der Bearbeitung der landwirtschaftlichen Nutzfläche. Es kann somit eine automatisierte oder zumindest teilautomatisierte Bearbeitung der landwirtschaftlichen Nutzfläche erfolgen, ohne dass ein Benutzereingriff erforderlich ist. Die automatisierte oder teilautomatisierte Bearbeitung der landwirtschaftlichen Nutzfläche erfolgt dabei topografieoptimiert und auf die Einstellmöglichkeiten der eingesetzten Landmaschine angepasst.

In einer weiteren Ausführungsform des erfindungsgemäßen Verfahrens erfolgt ein Modifizieren des abgerufenen topografieoptimierten Bewegungspfads während der Bearbeitung der landwirtschaftlichen Nutzfläche unter Berücksichtigung einer erfolgten Benutzerinteraktion und/oder unter Berücksichtigung von während der Bearbeitung erfassten Zusatzinformationen. Alternativ oder zusätzlich erfolgt ein Neuberechnen des topografieoptimierten Bewegungspfads während der Bearbeitung der landwirtschaftlichen Nutzfläche unter Berücksichtigung einer erfolgten Benutzerinteraktion und/oder unter Berücksichtigung während der Bearbeitung erfassten Zusatzinformationen. Der Bewegungspfad kann somit durch Benutzerinteraktionen in Echtzeit beeinflusst werden. Dies kann erforderlich sein, wenn während der Bearbeitung der landwirtschaftlichen Nutzfläche unerwartet Hindernisse entlang des zuvor berechneten topografieoptimierten Bewegungspfads auftreten. Das Modifizieren des abgerufenen topografieoptimierten Bewegungspfads kann selbsttätig durch die Landmaschine oder durch eine Benutzereingabe veranlasst werden. Das Neuberechnen des topografieoptimierten Bewegungspfads wird vorzugsweise durch die Datenverarbeitungseinrichtung ausgeführt, sodass beispielsweise die Rechenleistung eines Zentralrechners genutzt werden kann, in welchen die Datenverarbeitungseinrichtung integriert ist. Das Modifizieren des abgerufenen topografieoptimierten Bewegungspfads und/oder das Neuberechnen des topografieoptimierten Bewegungspfads kann auch direkt durch die Landmaschine erfolgen, sodass die Rechenleistung der Landmaschine genutzt wird.

In einer besonders bevorzugten Ausführungsform des erfindungsgemäßen Verfahrens wird eine Sämaschine zeitlich vor der Landmaschine, für welche der Bewegungspfad topografieoptimiert berechnet wurde, bei einem Sävorgang entlang des topografieoptimierten Bewegungspfads bewegt. Auf diese Weise erfolgt die Anlage von topografieoptimierten Fahrgassen auf der landwirtschaftlichen Nutzfläche, wobei die Fahrgassenanlage im Hinblick auf einen späteren Bearbeitungsvorgang angelegt wird. Somit kann während des Sävorgangs ein Fahrgassensystem angelegt werden, welches eine spätere topografieoptimierte Bearbeitung mit einer Landmaschine, welche keine Sämaschine ist, ermöglicht. Die Landmaschine kann in diesem Fall beispielsweise eine Streumaschine sein. Der Streuvorgang erfolgt im Regelfall entlang eines bereits existierenden Fahrgassensystems. Insofern ist es vorteilhaft, das Fahrgassensystem bereits für den Streuvorgang topografieoptimiert anzulegen. Dies erfolgt dadurch, dass der Sävorgang bereits entlang des für die Streumaschine optimierten Bewegungspfads erfolgt, obwohl der Sävorgang dies nicht erfordert. Während des Sävorgangs wird also perspektivisch ein Fahrgassensystem angelegt, welches die Topografie der landwirtschaftlichen Nutzfläche und die Möglichkeiten und Eigenschaften der Landmaschinen berücksichtigt, welche für eine nachträgliche Bearbeitung der landwirtschaftlichen Nutzfläche eingesetzt werden sollen.

Die der Erfindung zugrundeliegende Aufgabe wird ferner durch eine Datenverarbeitungseinrichtung gelöst, welche Mittel zur Ausführung des Verfahrens zum Ermitteln eines Bewegungspfads für eine Landmaschine nach einer der vorstehend beschriebenen Ausführungsformen umfasst. Hinsichtlich der Vorteile und Modifikationen der Datenverarbeitungseinrichtung wird auf die Vorteile und Modifikationen des erfindungsgemäßen Verfahrens zum Ermitteln eines Bewegungspfads für eine Landmaschine verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Kommunikationssystem aus einem Maschinenverbund, einer Datenverarbeitungseinrichtung, einer Datenbank und einem Anzeigegerät in einer schematischen Darstellung;
- Fig. 2: eine einen Bewegungspfad ausweisende Bearbeitungskarte in einer schematischen Darstellung;
- Fig. 3: einen Maschinenverbund mit einer getragenen Landmaschine bei der Bearbeitung einer landwirtschaftlichen Nutzfläche;
- Fig. 4: einen Maschinenverbund mit einer getragenen Landmaschine bei der Bearbeitung einer landwirtschaftlichen Nutzfläche;
- Fig. 5: einen Maschinenverbund mit einer getragenen Landmaschine bei der Bearbeitung einer landwirtschaftlichen Nutzfläche; und
- Fig. 6: eine einen topografieoptimierten Bewegungspfad ausweisende Bearbeitungskarte in einer schematischen Darstellung.

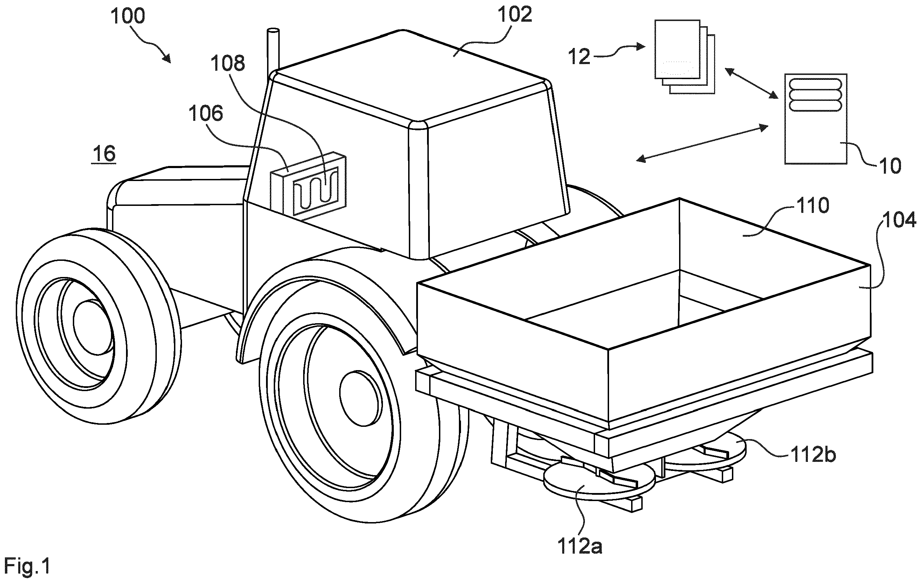

Die Fig. 1 zeigt ein Kommunikationssystem, welches zur Bearbeitung einer landwirtschaftlichen Nutzfläche 16 eingesetzt werden kann.

Das Kommunikationssystem umfasst einen Maschinenverbund 100 aus einem Trägerfahrzeug 102 und einer getragenen Landmaschine 104. Das Trägerfahrzeug 102 ist ein Traktor. Die Landmaschine 104 ist eine Streumaschine zum Ausbringen von Streugut. Hierzu weist die Landmaschine 104 einen Streugutbehälter 110 zum Bevorraten des auszubringenden Streuguts und zwei nebeneinander angeordnete und rotierend antreibbare Streuscheiben 112a, 112b zum Auswerfen des Streuguts auf die landwirtschaftlichen Nutzfläche 16 auf.

In der Fahrerkabine des Trägerfahrzeugs 102 ist ein Anzeigegerät 106 positioniert. Das Anzeigegerät 106 kann beispielsweise ein Terminal, insbesondere ein Isobus-Terminal, sein. Das Anzeigegerät 106 weist einen Display 108 zum Anzeigen von Informationen auf.

Das Kommunikationssystem umfasst ferner eine Datenverarbeitungseinrichtung 10, welche Bestandteil eines Zentralcomputers ist. Der die Datenverarbeitungseinrichtung 10 umfassende Zentralcomputer ist signalleitend mit der Landmaschine 104 und dem Anzeigegerät 106 verbunden. Ferner ist der die Datenverarbeitungseinrichtung 10 umfassende Zentralcomputer mit mehreren externen Datenbanken 12 verbunden, sodass Informationen von den Datenbanken 12 abgerufen werden können.

Mittels der Datenverarbeitungseinrichtung 10 lässt sich ein topografieoptimierter Bewegungspfad 18 für die Landmaschine 104 für die Bearbeitung der landwirtschaftlichen Nutzfläche 16 berechnen. Die Datenverarbeitungseinrichtung 10 ist ferner dazu eingerichtet, eine Bearbeitungskarte 14 der landwirtschaftlichen Nutzfläche 16 zu erstellen, wobei die Bearbeitungskarte 14 den berechneten topografieoptimierten Bewegungspfad 18 ausweist.

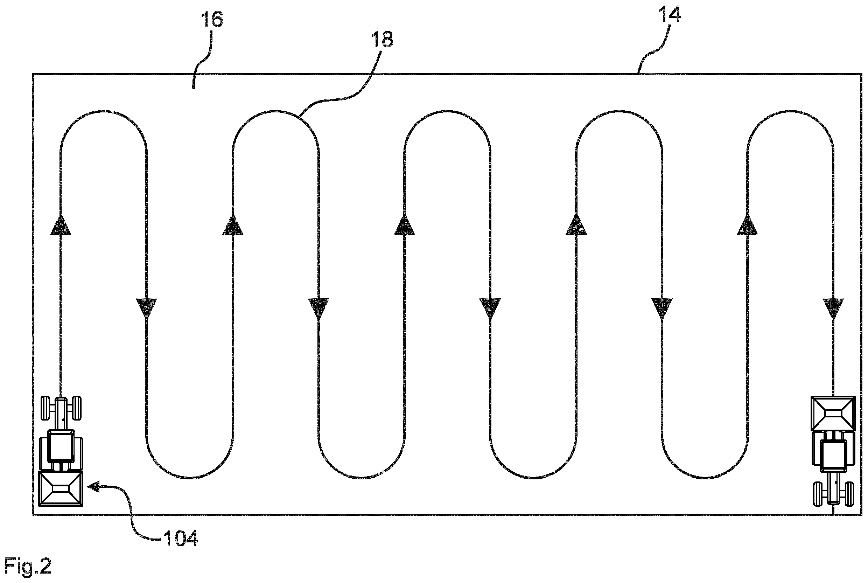

Die Fig. 2 zeigt eine einen Bewegungspfad 18 ausweisende Bearbeitungskarte 14 für eine landwirtschaftliche Nutzfläche 16. Die landwirtschaftliche Nutzfläche 16 weist in diesem Fall keinerlei gekrümmte Geländeformen, wie beispielsweise Hänge, Mulden, Täler, Senken oder Kuppen auf, sodass die Topografie der landwirtschaftlichen Nutzfläche 16 bei der Festlegung eines geeigneten Bewegungspfads 18 für die Landmaschine 104 unberücksichtigt bleiben kann.

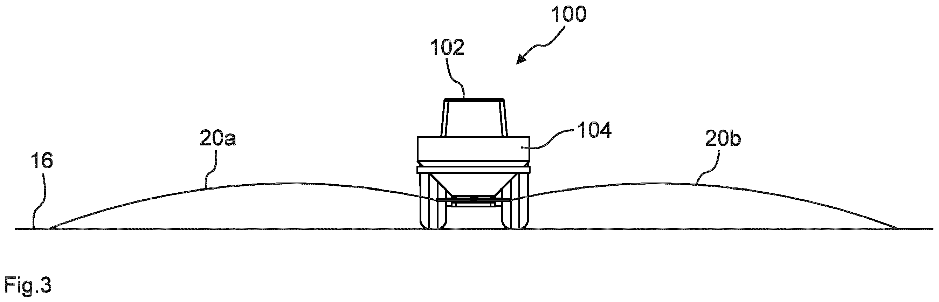

Die Fig. 3 bis 5 zeigen jedoch, dass die Topografie einer landwirtschaftlichen Nutzfläche 16 erhebliche Auswirkungen auf das mit einer Landmaschine erzielte Bearbeitungsergebnis haben kann. Vorliegend ist die Landmaschine 104 eine Streumaschine.

Die Fig. 3 zeigt in diesem Zusammenhang Streugut-Flugkurven 20a, 20b, welche zur Bearbeitung einer flachen landwirtschaftlichen Nutzfläche 16 geeignet sind.

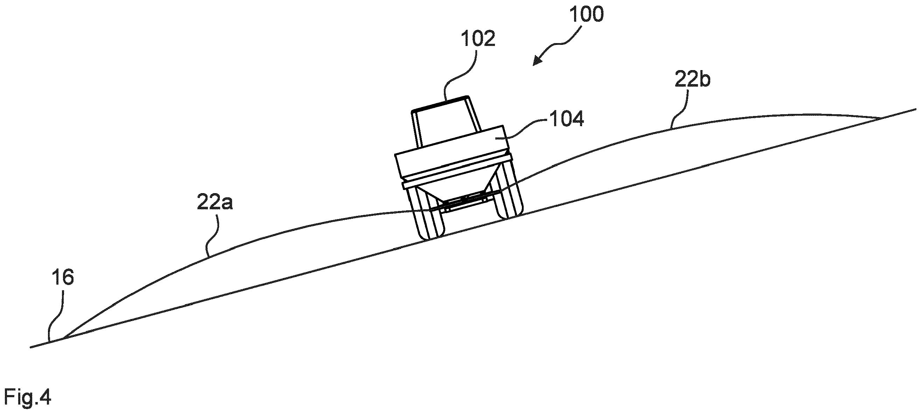

Die Fig. 4 zeigt, dass die auf eine Geländeneigung zurückzuführende Schräglage der Landmaschine 104 zu einer unbeabsichtigten Streugutausbringung führen kann. Zur Beibehaltung der beabsichtigten Flugkurven 22a, 22b sind die Einstellparameter der Landmaschine 104 an die Geländeneigung anzupassen. Die Landmaschine 104 weist hierzu mehrere veränderbare Einstellparameter auf, über welche die Streugutausbringung an die Geländeneigung und die Schräglage der Landmaschine 104 angepasst werden kann. Beispielsweise kann die Scheibendrehzahl der Streuscheiben 112a, 112b, der Aufgabepunkt des Streuguts auf die Streuscheiben 112a, 112b und/oder die Stellung eines Streugutmengenverstellschiebers verändert werden, um die Streugutausbringung in geeigneter Weise anzupassen.

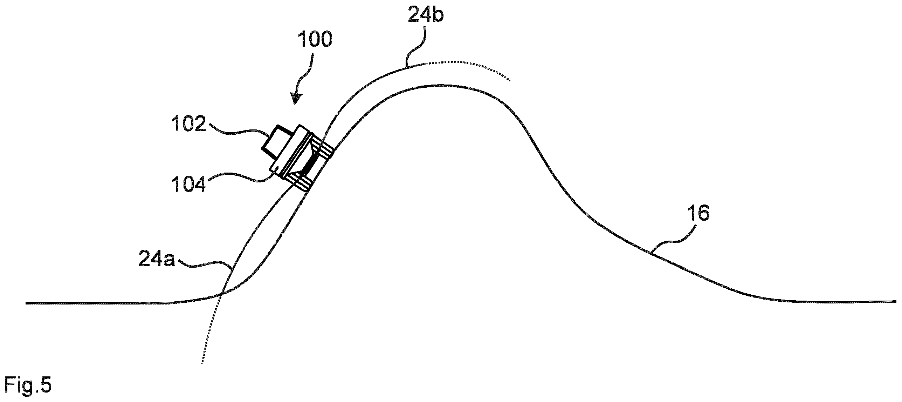

Die Fig. 5 zeigt, dass das Höhenprofil der landwirtschaftlichen Nutzfläche 16 zusätzlich den Auftreffpunkt des abgeworfenen Streuguts beeinflussen kann. Bei einer parallel zum Hang bewegten Landmaschine 104 ist bei der Einstellung der Einstellparameter zu berücksichtigen, dass sich auf der einen Seite der Landmaschine 104 das Tal des Hangs und auf der anderen Seite der Landmaschine 104 die Kuppe des Hangs befindet. Die Flugkurven 24a, 24b des Streuguts sind folglich an das Geländeprofil anzupassen, um die gewünschte Streugutausbringung erzielen zu können.

Die Praxis hat gezeigt, dass landwirtschaftliche Nutzflächen 16 häufig eine Topografie aufweisen, bei welchen das Anpassen der veränderbaren Einstellparameter der Landmaschine 104 unter gleichzeitiger Beibehaltung des üblichen Bewegungspfads 18 mit einer Vielzahl von Parallelfahrten entlang von parallel zueinander verlaufenden und äquidistant voneinander beabstandeten Fahrgassen (vgl. Fig. 2) nicht ausreichend ist, um das beabsichtigte Ausbringergebnis zu erzielen.

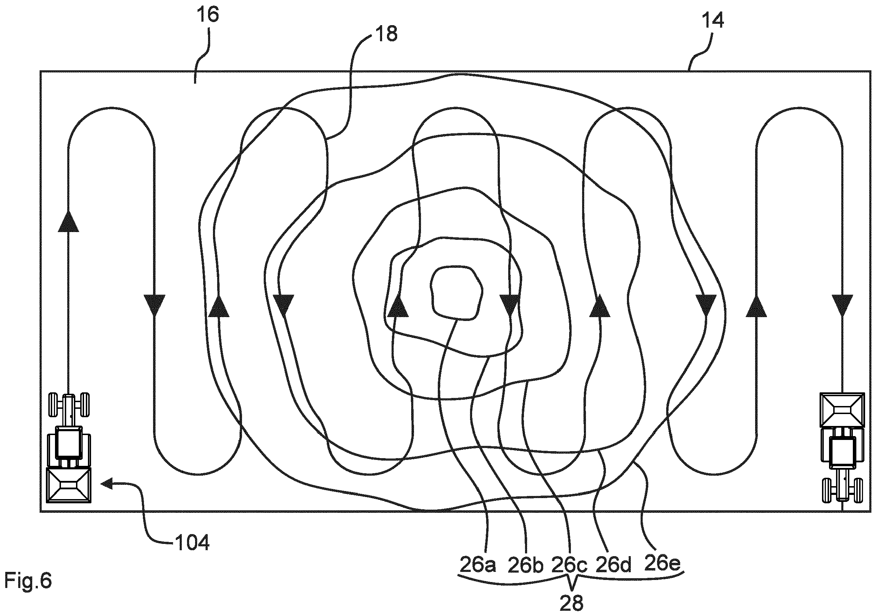

Die Datenverarbeitungseinrichtung 10 ist aus diesem Grunde dazu eingerichtet, einen topografieoptimierten Bewegungspfad 18 für die Landmaschine 104 zu berechnen. Ein derartiger topografieoptimierter Bewegungspfad 18 ist in der Fig. 6 dargestellt. Der berechnete topografieoptimierte Bewegungspfad 18 weicht im Bereich eines gekrümmten Geländeabschnitts der landwirtschaftlichen Nutzfläche 16 von dem Parallelfahrtenprinzip ab, sodass die Fahrgassen in diesem Bereich nicht parallel zueinander verlaufenden und auch nicht äquidistant voneinander beabstandeten sind. Die Fig. 6 zeigt die landwirtschaftliche Nutzfläche 16 und den topografieoptimierten Bewegungspfad 18 von oben, sodass der dargestellte Abstand zwischen den Fahrgassen aufgrund der Projektion nicht dem tatsächlichen Abstand entspricht.

Zum Berechnen des topografieoptimierten Bewegungspfads 18 empfängt die Datenverarbeitungseinrichtung 10 Einstellinformationen zu veränderbaren Einstellparametern an der Landmaschine 104 und deren Einfluss auf das Bearbeitungsergebnis. Wenn die Bearbeitung der landwirtschaftlichen Nutzfläche 16 die Ausbringung von Streugut mittels einer Streumaschine betrifft, empfängt die Datenverarbeitungseinrichtung 10 beispielsweise Einstellinformationen zu den einstellbaren Scheibendrehzahlen der Streuscheiben und den einstellbaren Aufgabepunkten des Streuguts auf die Streuscheiben. Darüber hinaus umfassen die Einstellinformationen konkrete Details zum Einfluss der Einstellparameter auf die Flugkurve des Streuguts, beispielsweise auf die Wurfweite und den Abwurfwinkel des Streuguts. Die von der Datenverarbeitungseinrichtung 10 empfangenen Einstellinformationen umfassen ebenfalls landmaschinenspezifische Einstellbereiche der veränderbaren Einstellparameter. Somit verfügt die Datenverarbeitungseinrichtung 10 über Informationen zu der maximal einstellbaren Scheibendrehzahl, und den Grenzwerten des einstellbaren Aufgabepunktes des Streuguts auf die Streuscheiben.

Ferner empfängt die Datenverarbeitungseinrichtung 10 Topografieinformationen 18 zu der zu bearbeitenden landwirtschaftlichen Nutzfläche 16, Flächeninformationen zu der Größe und der Form der zu bearbeitenden landwirtschaftlichen Nutzfläche 16 und Bodeninformationen zu dem Bodenzustand der zu bearbeitenden landwirtschaftlichen Nutzfläche 16.

Das Berechnen des topografieoptimierten Bewegungspfads 18 erfolgt unter Berücksichtigung von Einstellinformationen zu veränderbaren Einstellparametern an der Landmaschine 104 und deren Einfluss auf das Bearbeitungsergebnis und unter Berücksichtigung von Topografieinformationen zu der landwirtschaftlichen Nutzfläche 16. Ferner werden Flächeninformationen zu der Größe und der Form der landwirtschaftlichen Nutzfläche 26 und Bodeninformationen zu dem Bodenzustand der landwirtschaftlichen Nutzfläche 16 bei der Berechnung des topografieoptimierten Bewegungspfads 18 durch die Datenverarbeitungseinrichtung 10 berücksichtigt.

Die Datenverarbeitungseinrichtung 10 berechnet neben dem topografieoptimierten Bewegungspfad 18 auch topografieoptimierte Einstellvorgaben für die Landmaschine 104 sowie von der Umgebung, der Ausrichtung und der Bewegungsrichtung abhängen topografieoptimierte Einstellpositionen für die topografieoptimierten Einstellvorgaben entlang des topografieoptimierten Bewegungspfads 18. Das Berechnen des topografieoptimierten Bewegungspfads, das Berechnen der topografieoptimierten Einstellvorgaben und das Berechnen der topografieoptimierten Einstellpositionen für die Einstellvorgaben erfolgt dabei zeitlich vor der Bearbeitung der landwirtschaftlichen Nutzfläche 16, sodass dem Maschinenbediener die Bearbeitungskarte 14 bereits zu Beginn der Bearbeitung über ein Anzeigegerät 106 angezeigt werden kann.

Die durch die Datenverarbeitungseinrichtung 10 erstellte Bearbeitungskarte 14 kann eine zweidimensionale oder dreidimensionale Karte der landwirtschaftlichen Nutzfläche 16 sein. Neben dem topografieoptimierten Bewegungspfad 18 weist die Bearbeitungskarte 14 über die Höhenlinien 26a-26e auch Topografieinformationen 28 zu der landwirtschaftlichen Nutzfläche 16 aus. Darüber hinaus können die berechneten topografieoptimierten Einstellvorgaben und/oder die berechneten topografieoptimierten Einstellpositionen für die topografieoptimierten Einstellvorgaben über die Bearbeitungskarte 14 visualisiert werden.

Wenn während der Bearbeitung der landwirtschaftlichen Nutzfläche 16 eine unbeabsichtigte Abweichung von dem topografieoptimierten Bewegungspfad 18 erfolgt, wird der topografieoptimierte Bewegungspfad 18 durch die Datenverarbeitungseinrichtung 10 entweder korrigiert oder neu berechnet.

Die den topografieoptimierten Bewegungspfad 18 aufweisende Bearbeitungskarte 14 kann durch ein portables Anzeigegerät 106, beispielsweise ein Terminal, von einer Datenbank abgerufen werden, sodass die Bearbeitungskarte 14 vor und während des Bearbeitungsvorgangs durch das Anzeigegerät 106 dem Maschinenbediener angezeigt werden kann.

Der Maschinenverbund 100 kann dazu eingerichtet sein, sich während der Bearbeitung der landwirtschaftlichen Nutzfläche 16 selbsttätig entlang des Bewegungspfads 18 zu bewegen oder nach einer Abweichung von dem Bewegungspfads 18 selbsttätig wieder zu dem Bewegungspfad 18 zurückzukehren. Die Bearbeitung der landwirtschaftlichen Nutzfläche 16 kann somit automatisiert oder teilautomatisiert erfolgen, wobei die automatisierte oder teilautomatisierte Bearbeitung gleichzeitig topografieoptimiert umgesetzt wird. Zur automatisierten oder teilautomatisierten Bearbeitung der landwirtschaftlichen Nutzfläche 16 werden die topografieoptimierten Einstellvorgaben an den topografieoptimierten Einstellpositionen selbsttätig durch die Landmaschine 104 während der Bearbeitung eingestellt.

Ferner kann der abgerufene topografieoptimierte Bewegungspfad 18 auch während der Bearbeitung der landwirtschaftlichen Nutzfläche 16 modifiziert oder neu berechnet werden, beispielsweise unter Berücksichtigung einer erfolgten Benutzerinteraktion. Somit können Umstände berücksichtigt werden, welche erst bei der Bearbeitung der landwirtschaftlichen Nutzfläche 16 festgestellt werden. Der Bewegungspfad und/oder die Einstellstellparameter werden dann beispielsweise in Echtzeit angepasst, sodass trotzdem die beabsichtigte Streugutausbringung umgesetzt wird.

### Bezugszeichenliste

- 10: Datenverarbeitungseinrichtung
- 12: Datenbank
- 14: Bearbeitungskarte
- 16: Nutzfläche
- 18: Bewegungspfad
- 20a, 20b: Flugkurven
- 22a, 22b: Flugkurven
- 24a, 24b: Flugkurven
- 26a-26e: Höhenlinien
- 28: Topografieinformationen

- 100: Maschinenverbund
- 102: Trägerfahrzeug
- 104: Landmaschine
- 106: Anzeigegerät
- 108: Display
- 110: Streugutbehälter
- 112a, 112b: Streuscheiben

## Patentansprüche

1. Verfahren zum Ermitteln eines Bewegungspfads für eine Landmaschine (104) für die Bearbeitung einer landwirtschaftlichen Nutzfläche (16), mit dem Schritt
- Empfangen von Einstellinformationen zu veränderbaren Einstellparametern an der Landmaschine (104) und deren Einfluss auf das Bearbeitungsergebnis durch eine Datenverarbeitungseinrichtung (10),
**dadurch gekennzeichnet, dass** die empfangenen Einstellinformationen vorgegebene landmaschinenspezifische Einstellbereiche der veränderbaren Einstellparameter umfassen und dadurch, dass das Verfahren ferner die folgenden Schritte umfasst:
- Empfangen von Topografieinformationen (28) zu der zu bearbeitenden landwirtschaftlichen Nutzfläche (16) durch die Datenverarbeitungseinrichtung (10); und
- Berechnen eines topografieoptimierten Bewegungspfads (18) für die Landmaschine (104) für die Bearbeitung der landwirtschaftlichen Nutzfläche (16) unter Berücksichtigung der empfangenen Einstellinformationen und der empfangenen Topografieinformationen (28) durch die Datenverarbeitungseinrichtung (10), insbesondere zeitlich vor der Bearbeitung der landwirtschaftlichen Nutzfläche (16),
wobei der topographieoptimierte Bewegungspfad bereits bei der Anlage eines Fahrgassensystems auf der landwirtschaftlichen Nutzfläche berücksichtigt wird,
wobei die Anlage des Fahrgassensystems während eines Sävorgangs mit einer Sämaschine erfolgt, und wobei das Fahrgassensystem vorausschauend für eine andere landwirtschaftliche Maschine angelegt wird, mit welcher eine Folgebearbeitung der landwirtschaftlichen Nutzfläche geplant ist.

2. Verfahren nach Anspruch 1,
**gekennzeichnet durch** den Schritt:
- Erstellen einer Bearbeitungskarte (14) der landwirtschaftlichen Nutzfläche (16) durch die Datenverarbeitungseinrichtung (10), wobei die Bearbeitungskarte (14) die empfangenen Topografieinformationen (28) und/oder den berechneten topografieoptimierten Bewegungspfad (18) ausweist.

3. Verfahren nach Anspruch 1 oder 2,
**gekennzeichnet durch** den Schritt:
- Berechnen von topografieoptimierten Einstellvorgaben für die Landmaschine (104) für die Bearbeitung der landwirtschaftlichen Nutzfläche (16) unter Berücksichtigung der empfangenen Einstellinformationen und der empfangenen Topografieinformationen (28) durch die Datenverarbeitungseinrichtung (10), insbesondere zeitlich vor der Bearbeitung der landwirtschaftlichen Nutzfläche (16);
wobei die von der Datenverarbeitungseinrichtung (10) erstellte Bearbeitungskarte (14) der landwirtschaftlichen Nutzfläche (16) vorzugsweise die berechneten topografieoptimierten Einstellvorgaben ausweist.

4. Verfahren nach Anspruch 3,
**gekennzeichnet durch** den Schritt:
- Berechnen von topografieoptimierten Einstellpositionen für die topografieoptimierten Einstellvorgaben entlang des topografieoptimierten Bewegungspfads (18) durch die Datenverarbeitungseinrichtung (10), insbesondere zeitlich vor der Bearbeitung der landwirtschaftlichen Nutzfläche (16);
wobei die von der Datenverarbeitungseinrichtung (10) erstellte Bearbeitungskarte (14) der landwirtschaftlichen Nutzfläche (16) vorzugsweise die berechneten topografieoptimierten Einstellpositionen ausweist.

5. Verfahren nach einem der vorstehenden Ansprüche,
**gekennzeichnet durch** den Schritt:
- Empfangen von Flächeninformationen zu der Größe und/oder der Form der zu bearbeitenden landwirtschaftlichen Nutzfläche (16) durch die Datenverarbeitungseinrichtung (10);
wobei das Berechnen des topografieoptimierten Bewegungspfads (18), das Berechnen der topografieoptimierten Einstellvorgaben und/oder das Berechnen der topografieoptimierten Einstellpositionen auch unter Berücksichtigung der empfangenen Flächeninformationen erfolgt.

6. Verfahren nach einem der vorstehenden Ansprüche,
**gekennzeichnet durch** den Schritt:
- Empfangen von Bodeninformationen zu dem Bodenzustand der zu bearbeitenden landwirtschaftlichen Nutzfläche (16) durch die Datenverarbeitungseinrichtung (10);
wobei das Berechnen des topografieoptimierten Bewegungspfads (18), das Berechnen der topografieoptimierten Einstellvorgaben und/oder das Berechnen der topografieoptimierten Einstellpositionen auch unter Berücksichtigung der empfangenen Bodeninformationen erfolgt.

7. Verfahren nach einem der vorstehenden Ansprüche,
**dadurch gekennzeichnet, dass** die Datenverarbeitungseinrichtung (10) Bestandteil eines lokalen Computers ist und die Einstellinformationen, die Topografieinformationen (28), die Flächeninformationen und/oder die Bodeninformationen durch den lokalen Computer vorzugsweise von einer oder mehreren externen Datenbanken (12) und/oder von einem oder mehreren Sensoren abgerufen werden.

8. Verfahren nach einem der vorstehenden Ansprüche,
**dadurch gekennzeichnet, dass** die Datenverarbeitungseinrichtung (10) Bestandteil eines über ein Netzwerk zugänglichen Zentralcomputers ist und die Einstellinformationen, die Topografieinformationen (28), die Flächeninformationen und/oder die Bodeninformationen durch den Zentralcomputer vorzugsweise von einer oder mehreren externen Datenbanken (12) abgerufen werden.

9. Verfahren nach Anspruch 7 oder 8,
**dadurch gekennzeichnet, dass** das Empfangen der Einstellinformationen, der Topografieinformationen (28), der Flächeninformationen und/oder der Bodeninformationen durch eine Benutzereingabe an einem Eingabegerät veranlasst wird.

10. Verfahren zum Bearbeiten einer landwirtschaftlichen Nutzfläche (16) mit einer Landmaschine (104), mit den Schritten:
- Ermitteln eines Bewegungspfads (18) für die Landmaschine (104) für die Bearbeitung der landwirtschaftlichen Nutzfläche (16); und
- Bewegen der Landmaschine (104) entlang des ermittelten Bewegungspfads (18) während der Bearbeitung der landwirtschaftlichen Nutzfläche (16);
**dadurch gekennzeichnet, dass** das Ermitteln des Bewegungspfads (18) topografieoptimiert nach einem der vorstehenden Ansprüche erfolgt.

11. Verfahren nach Anspruch 10,
**gekennzeichnet durch** zumindest einen der folgenden Schritte:
- Abrufen einer den topografieoptimierten Bewegungspfad (18) ausweisenden Bearbeitungskarte (14) der landwirtschaftlichen Nutzfläche (16) durch ein portables Anzeigegerät (106) oder eine Anzeigeeinrichtung der Landmaschine (104) von einer Datenbank;
- Anzeigen der Bearbeitungskarte (14) durch das portables Anzeigegerät (106) oder die Anzeigeeinrichtung der Landmaschine (104) während der Bearbeitung der landwirtschaftlichen Nutzfläche (16).

12. Verfahren nach Anspruch 10 oder 11,
**gekennzeichnet durch** zumindest einen der folgenden Schritte:
- Abrufen von topografieoptimierten Einstellvorgaben für die Landmaschine (104) für die Bearbeitung der landwirtschaftlichen Nutzfläche (16) durch die Landmaschine (104);
- Abrufen von topografieoptimierten Einstellpositionen für die topografieoptimierten Einstellvorgaben entlang des topografieoptimierten Bewegungspfads (18) durch die Landmaschine (104);
- selbsttätiges Einstellen der topografieoptimierten Einstellvorgaben an den topografieoptimierten Einstellpositionen durch die Landmaschine (104) während der Bearbeitung der landwirtschaftlichen Nutzfläche (16).

13. Verfahren nach einem der Ansprüche 10 bis 12,
**gekennzeichnet durch** zumindest einen der folgenden Schritte:
- Modifizieren des abgerufenen topografieoptimierten Bewegungspfads (18) während der Bearbeitung der landwirtschaftlichen Nutzfläche (16) unter Berücksichtigung einer erfolgten Benutzerinteraktion und/oder unter Berücksichtigung von während der Bearbeitung erfassten Zusatzinformationen;
- Neuberechnen des topografieoptimierten Bewegungspfads (18) während der Bearbeitung der landwirtschaftlichen Nutzfläche (16) unter Berücksichtigung einer erfolgten Benutzerinteraktion und/oder unter Berücksichtigung von während der Bearbeitung erfassten Zusatzinformationen.

14. System, umfassend eine Datenverarbeitungseinrichtung (10),
**gekennzeichnet durch** Mittel zur Ausführung des Verfahrens zum Ermitteln eines Bewegungspfads (18) für eine Landmaschine (104) nach einem der Ansprüche 1 bis 9.

## Claims

1. Method for determining a motion path for an agricultural machine (104) for the cultivation of an area of agricultural land (16), comprising the step:
- receiving, by means of a data processing device (10), setting information regarding variable setting parameters on the agricultural machine (104) and their influence on the cultivation result,
**characterized in that** the received setting information comprises predetermined agricultural machine-specific setting ranges of the variable setting parameters and **in that** the method further comprises the following steps:
- receiving, by means of the data processing device (10), topography information (28) on the area of agricultural land (16) to be cultivated; and
- calculating, by means of the data processing device (10), in particular prior to the cultivation of the area of agricultural land (16), a topography-optimized motion path (18) for the agricultural machine (104) for the cultivation of the area of agricultural land (16), taking into account the received setting information and the received topography information (28),
the topography-optimized motion path having already been taken into account when creating a drive aisle system on the area of agricultural land,
the drive aisle system being created during a sowing procedure which uses a sowing machine, and the drive aisle system being created in advance for another agricultural machine, by means of which subsequent cultivation of the agricultural area is planned.

2. Method according to claim 1,
**characterized by** the step of:
- creating a cultivation map (14) of the area of agricultural land (16) by means of the data processing device (10), the cultivation map (14) showing the received topography information (28) and/or the calculated topography-optimized motion path (18).

3. Method according to claim 1 or 2,
**characterized by** the step of:
- calculating, by means of the data processing device (10), in particular prior to the cultivation of the area of agricultural land (16), topography-optimized setting specifications for the agricultural machine (104) for the cultivation of the area of agricultural land (16), taking into account the received setting information and the received topography information (28);
the cultivation map (14) of the area of agricultural land (16) created by the data processing device (10) preferably showing the calculated topography-optimized setting specifications.

4. Method according to claim 3,
**characterized by** the step of:
- calculating, by means of the data processing device (10), in particular prior to the cultivation of the area of agricultural land (16), topography-optimized setting positions for the topography-optimized setting specifications along the topography-optimized motion path (18);
the cultivation map (14) of the area of agricultural land (16) created by the data processing device (10) preferably showing the calculated topography-optimized setting positions.

5. Method according to any of the preceding claims,
**characterized by** the step of:
- receiving, by means of the data processing device (10), area information regarding the size and/or shape of the area of agricultural land (16) to be cultivated;
the calculation of the topography-optimized motion path (18), calculation of the topography-optimized setting specifications and/or calculation of the topography-optimized setting positions also taking into account the received area information.

6. Method according to any of the preceding claims,
**characterized by** the step of:
- receiving, by means of the data processing device (10), soil information regarding the soil condition of the area of agricultural land (16) to be cultivated;
the calculation of the topography-optimized motion path (18), calculation of the topography-optimized setting specifications and/or calculation of the topography-optimized setting positions also taking into account the received soil information.

7. Method according to any of the preceding claims,
**characterized in that** the data processing device (10) is a constituent part of a local computer, and the setting information, the topography information (28), the area information and/or the soil information are retrieved by the local computer preferably from one or more external databases (12) and/or from one or more sensors.

8. Method according to any of the preceding claims,
**characterized in that** the data processing device (10) is a constituent part of a central computer accessible via a network, and the setting information, the topography information (28), the area information and/or the soil information are retrieved by the central computer preferably from one or more external databases (12).

9. Method according to claim 7 or 8,
**characterized in that** receiving setting information, topography information (28), area information and/or soil information is initiated by a user input on an input appliance.

10. Method for cultivation of an area of agricultural land (16) using an agricultural machine (104), comprising the steps:
- determining a motion path (18) for the agricultural machine (104) for the cultivation of the area of agricultural land (16); and
- moving the agricultural machine (104) along the determined motion path (18) during cultivation of the area of agricultural land (16);
**characterized in that** determining the motion path (18) is topography-optimized according to any of the preceding claims.

11. Method according to claim 10,
**characterized by** at least one of the following steps:
- retrieving a cultivation map (14) of the area of agricultural land (16), which cultivation map shows the topography-optimized motion path (18), from a database by means of a portable display appliance (106) or a display device of the agricultural machine (104);
- displaying the cultivation map (14) by means of the portable display appliance (106) or the display device of the agricultural machine (104) during the cultivation of the area of agricultural land (16).

12. Method according to claim 10 or 11,
**characterized by** at least one of the following steps:
- retrieving topography-optimized setting specifications for the agricultural machine (104) for the cultivation of the area of agricultural land (16) by means of the agricultural machine (104);
- retrieving topography-optimized setting positions for the topography-optimized setting specifications along the topography-optimized motion path (18) by means of the agricultural machine (104);
- automatic setting of the topography-optimized setting specifications to the topography-optimized setting positions by means of the agricultural machine (104) during the cultivation of the area of agricultural land (16).

13. Method according to any of claims 10 to 12,
**characterized by** at least one of the following steps:
- modifying the retrieved topography-optimized motion path (18) during the cultivation of the area of agricultural land (16), taking into account any user interaction that has taken place and/or taking into account additional information acquired during the cultivation of the area of agricultural land;
- recalculating the topography-optimized motion path (18) during the cultivation of the area of agricultural land (16), taking into account any user interaction that has taken place and/or taking into account additional information acquired during the cultivation of the area of agricultural land.

14. System comprising a data processing device (10),
**characterized by** means for carrying out the method for determining a motion path (18) for an agricultural machine (104) according to any of claims 1 to 9.

## Revendications

1. Procédé destiné à la détermination d'une trajectoire de déplacement pour une machine agricole (104) pour le travail d'une surface utile (16) agricole, comportant l'étape consistant à
- recevoir, par un dispositif de traitement de données (10), des informations de réglage concernant des paramètres de réglage modifiables sur la machine agricole (104) et leur influence sur le résultat du travail,
**caractérisé en ce que** les informations de réglage reçues comprennent des plages de réglage prédéterminées spécifiques à la machine agricole des paramètres de réglage modifiables et **en ce que** le procédé comprend en outre les étapes suivantes consistant à :
- recevoir des informations topographiques (28) concernant la surface utile (16) agricole à travailler par le dispositif de traitement de données (10) ; et
- calculer une trajectoire de déplacement (18) à topographie optimisée pour la machine agricole (104) pour le travail de la surface utile (16) agricole en tenant compte des informations de réglage reçues et des informations topographiques (28) reçues par le dispositif de traitement de données (10), en particulier dans le temps avant le travail de la surface utile (16) agricole,
dans lequel la trajectoire de déplacement à topographie optimisée est déjà prise en compte lors de l'installation d'un système de jalonnage sur la surface agricole utile,
dans lequel l'installation du système de jalonnage s'effectue pendant une opération de semis avec un semoir, et dans lequel le système de jalonnage est installé de manière anticipée pour une autre machine agricole avec laquelle un travail ultérieur de la surface agricole utile est prévu.

2. Procédé selon la revendication 1,
**caractérisé par** l'étape consistant à :
- établir une carte de travail (14) de la surface utile (16) agricole par le dispositif de traitement de données (10), dans lequel la carte de travail (14) présente les informations topographiques (28) reçues et/ou la trajectoire de déplacement (18) calculée et à topographie optimisée.

3. Procédé selon la revendication 1 ou 2,
**caractérisé par** l'étape consistant à :
- calculer des consignes de réglage à topographie optimisée pour la machine agricole (104) pour le travail de la surface utile (16) agricole en tenant compte des informations de réglage reçues et des informations topographiques (28) reçues par le dispositif de traitement de données (10), en particulier dans le temps avant le travail de la surface utile (16) agricole ;
dans lequel la carte de travail (14) de la surface utile (16) agricole établie par le dispositif de traitement de données (10) présente de préférence les consignes de réglage calculées et à topographie optimisée.

4. Procédé selon la revendication 3,
**caractérisé par** l'étape consistant à :
- calculer des positions de réglage à topographie optimisée pour les consignes de réglage à topographie optimisée le long de la trajectoire de déplacement (18) à topographie optimisée par le dispositif de traitement de données (10), en particulier dans le temps avant le travail de la surface utile (16) agricole ;
dans lequel la carte de travail (14) de la surface utile (16) agricole établie par le dispositif de traitement de données (10) présente de préférence les positions de réglage calculées et à topographie optimisée.

5. Procédé selon l'une des revendications précédentes,
**caractérisé par** l'étape consistant à :
- recevoir, par le dispositif de traitement de données (10), des informations de surface concernant la taille et/ou la forme de la surface utile (16) agricole à travailler ;
dans lequel le calcul de la trajectoire de déplacement (18) à topographie optimisée, le calcul des consignes de réglage à topographie optimisée et/ou le calcul des positions de réglage à topographie optimisée s'effectuent également en tenant compte des informations de surface reçues.

6. Procédé selon l'une des revendications précédentes,
**caractérisé par** l'étape consistant à :
- recevoir, par le dispositif de traitement de données (10), des informations de sol concernant l'état du sol de la surface utile (16) agricole à travailler ;
dans lequel le calcul de la trajectoire de déplacement (18) à topographie optimisée, le calcul des consignes de réglage à topographie optimisée et/ou le calcul des positions de réglage à topographie optimisée s'effectuent également en tenant compte des informations de sol reçues.

7. Procédé selon l'une des revendications précédentes,
**caractérisé en ce que** le dispositif de traitement de données (10) fait partie d'un ordinateur local et les informations de réglage, les informations topographiques (28), les informations de surface et/ou les informations de sol sont appelées par l'ordinateur local, de préférence à partir d'une ou plusieurs bases de données (12) externes et/ou à partir d'un ou plusieurs capteurs.

8. Procédé selon l'une des revendications précédentes,
**caractérisé en ce que** le dispositif de traitement de données (10) fait partie d'un ordinateur central accessible par l'intermédiaire d'un réseau et les informations de réglage, les informations topographiques (28), les informations de surface et/ou les informations de sol sont appelées par l'ordinateur central, de préférence à partir d'une ou plusieurs bases de données (12) externes.

9. Procédé selon la revendication 7 ou 8,
**caractérisé en ce que** la réception des informations de réglage, des informations topographiques (28), des informations de surface et/ou des informations de sol est provoquée par une entrée d'utilisateur sur un dispositif d'entrée.

10. Procédé pour le travail d'une surface utile (16) agricole avec une machine agricole (104), comportant les étapes consistant à :
- déterminer une trajectoire de déplacement (18) pour la machine agricole (104) afin de travailler la surface utile (16) agricole ; et
- déplacer la machine agricole (104) le long de la trajectoire de déplacement (18) déterminée pendant le travail de la surface utile (16) agricole ;
**caractérisé en ce que** la détermination de la trajectoire de déplacement (18) s'effectue de manière optimisée en topographie selon l'une des revendications précédentes.

11. Procédé selon la revendication 10,
**caractérisé par** au moins l'une des étapes suivantes consistant à :
- appeler une carte de travail (14) de la surface utile (16) agricole présentant la trajectoire de déplacement (18) à topographie optimisée par un appareil d'affichage (106) portable ou un dispositif d'affichage de la machine agricole (104) à partir d'une base de données ;
- afficher la carte de travail (14) par l'appareil d'affichage (106) portable ou le dispositif d'affichage de la machine agricole (104) pendant le travail de la surface utile (16) agricole.

12. Procédé selon la revendication 10 ou 11,
**caractérisé par** au moins l'une des étapes suivantes consistant à :
- appeler des consignes de réglage à topographie optimisée pour la machine agricole (104) en vue du travail de la surface utile (16) agricole par la machine agricole (104) ;
- appeler des positions de réglage à topographie optimisée pour les consignes de réglage à topographie optimisée le long de la trajectoire de déplacement (18) à topographie optimisée par la machine agricole (104) ;
- régler automatiquement les consignes de réglage à topographie optimisée aux positions de réglage à topographie optimisée par la machine agricole (104) pendant le travail de la surface utile (16) agricole.

13. Procédé selon l'une des revendications 10 à 12,
**caractérisé par** au moins l'une des étapes suivantes consistant à :
- modifier la trajectoire de déplacement (18) à topographie optimisée appelée pendant le travail de la surface utile (16) agricole en tenant compte d'une interaction de l'utilisateur qui a eu lieu et/ou en tenant compte d'informations supplémentaires détectées pendant le travail ;
- recalculer la trajectoire de déplacement (18) à topographie optimisée pendant le travail de la surface utile (16) agricole en tenant compte d'une interaction de l'utilisateur qui a eu lieu et/ou en tenant compte d'informations supplémentaires détectées pendant le travail.

14. Système comprenant un dispositif de traitement de données (10),
**caractérisé par** des moyens pour la mise en oeuvre du procédé de détermination d'une trajectoire de déplacement (18) pour une machine agricole (104) selon l'une des revendications 1 à 9.
